# EUROPEAN PATENT APPLICATION

(11) **EP 2 680 121 A1**
(43) Date of publication of application: **01.01.2014**
(21) Application number: 12174338.9
(22) Date of filing: 29.06.2012
(51) Int. Cl.: G06F 3/0488, G06F 3/0483

(54) **System and method for controlling an electronic device**

(71) Applicant: BlackBerry Limited, Waterloo, ON N2K 0A7 (CA)
(72) Inventor: Rydenhag, Daniel Tobias, Gothenburg 413 04 (SE); Johansson, Per Ake, Malmö 211 40 (SE)
(74) Representative: Moore, Barry

(57) **Abstract**

A method and system are provided for controlling an electronic device. The method includes detecting a gesture on a touch-sensitive input mechanism of the electronic device and operating the electronic device in a first mode associated with the gesture. The method may also include, prior to detecting the gesture, determining that the electronic device is operating in a second mode and displaying a visual indicator associated with the first mode upon determining the second mode.

## Description

### TECHNICAL FIELD:

The following relates generally to controlling an electronic device using a gesture.

### DESCRIPTION OF THE RELATED ART

Many electronic devices, including mobile devices, include one or more touch-sensitive input mechanisms such as a touch-sensitive display or a touch pad to provide inputs to the electronic device. The user can provide an input to the touch-sensitive component using an object (e.g. a finger of a user or a stylus) to perform a gesture near or directly on the surface of the touch-sensitive component. For example, the gesture can include swiping the object upwards or downwards across a portion of the touch-sensitive display to scroll content displayed on the touch-sensitive display. Other gestures can include more than one object (e.g. two fingers of a user). For example, a gesture can include placing two objects on a touch-sensitive display and bringing the objects closer together to perform a "pinching" gesture to zoom into content displayed on the touch-sensitive display.

### SUMMARY

In one aspect there is provided a method of controlling an electronic device. The method includes detecting a gesture on a touch-sensitive input mechanism of the electronic device and operating the electronic device in a first mode associated with the gesture.

In another aspect, there is provided a computer readable storage medium for controlling an electronic device. The computer readable storage medium includes computer executable instructions for detecting a gesture on a touch-sensitive input mechanism of the electronic device and operating the electronic device in a first mode associated with the gesture.

In another aspect, there is provided an electronic device that includes a processor, a touch-sensitive input mechanism and memory. The memory stores computer executable instructions for detecting a gesture on a touch-sensitive input mechanism of the electronic device and operating the electronic device in a first mode associated with the gesture.

### BRIEF DESCRIPTION OF THE DRAWINGS

Embodiments will now be described by way of example only with reference to the appended drawings wherein:

FIG. 1 is a plan view of an example of a mobile device receiving a gesture.

FIG. 2 is a diagram of an example of a wireless communication system.

FIG. 3 is a diagram of an example of a mobile device.

FIG. 4 is a plan view of an example of a mobile device.

FIG. 5 is a plan view of another example of a mobile device.

FIG. 6 is a plan view of example gestures on the mobile device of FIG. 5.

FIG. 7 is a diagram of an example configuration of a gesture input application.

FIG. 8 is a flow diagram of example computer executable instructions for controlling a mobile device using a gesture.

FIG. 9 is a plan view of another example of a mobile device receiving gestures.

FIG. 10 is a flow diagram of another example computer executable instructions for controlling a mobile device using a gesture.

FIGS. 11-13 are plan views of examples of a mobile device displaying a visual indicator associated with an operating mode.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practised without these specific details. In other instances, well-known methods, procedures and components have not been described in detail so as not to obscure the example embodiments described herein. Also, the description is not to be considered as limiting the scope of the example embodiments described herein.

Electronic devices, including tablet computers and other mobile devices, may operate according to various modes or profiles, each corresponding to a predetermined configuration of the electronic device. The operating mode or profile may set specific features of the electronic device, such as visual settings (e.g. LED or display settings), audio settings (e.g. volume), radio or connectivity settings and other notification settings (e.g. vibration or haptic settings). For example, a mobile device may be configured to a "bedside" mode when the mobile device is placed near a bed of a user. The bedside mode may reduce visual and/or audio disruptions from the mobile device by dimming or turning off the display, disabling one or more audio alerts, etc.

However, configuring a mobile device to an operating mode may require a user to perform multiple steps through the user interface, thus being cumbersome and inconvenient. A user may be further discouraged from configuring the mobile device at the end of a day as the user may be tired and may not want to exert the effort required to perform the sequence of steps. As a result, a user may not configure the mobile device to a particular operating mode only to be subsequently disrupted by an alert or other output of the mobile device that would have been disabled had the mobile device been configured to the particular operating mode.

Therefore, it has been recognized that methods for configuring an electronic device into an operating mode may be limited and inconvenient. To address this, the following describes a method, computer readable storage medium and electronic device operable to control the electronic device.

In one aspect there is provided a method of controlling an electronic device. The method includes detecting a gesture on a touch-sensitive input mechanism of the electronic device and operating the electronic device in a first mode associated with the gesture.

In another aspect, there is provided a computer readable storage medium for controlling an electronic device. The computer readable storage medium includes computer executable instructions for detecting a gesture on a touch-sensitive input mechanism of the electronic device and operating the electronic device in a first mode associated with the gesture.

In another aspect, there is provided an electronic device that includes a processor, a touch-sensitive input mechanism and memory. The memory stores computer executable instructions for detecting a gesture on a touch-sensitive input mechanism of the electronic device and operating the electronic device in a first mode associated with the gesture.

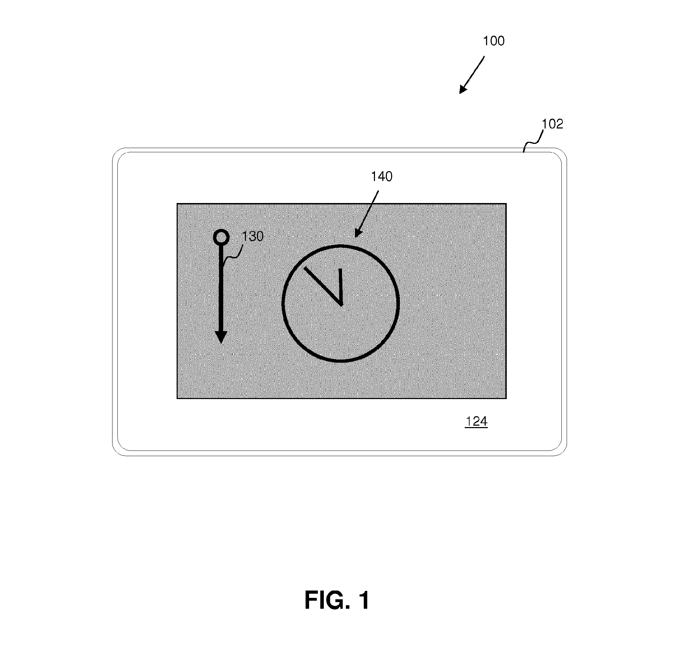

Referring to FIG. 1, a plan view of an example embodiment of an electronic device, such as a mobile device 100, receiving a gesture 130 is provided. The mobile device 100 includes a touch-sensitive display 102. The touch-sensitive display 102 includes a touch-sensitive non-display area 124 surrounding a touch-sensitive display area 122, both of which may be capable of receiving inputs in the form of gestures. The gesture 130 may involve the touch-sensitive non-display area 124, the touch-sensitive display area 122 or both.

In the example of FIG. 1, the gesture 130 is a swipe gesture in the downward direction. The mobile device 100 is configured to an operating mode, such as a bedside mode, upon detecting the gesture 130. In the bedside mode, the mobile device 100 may operate with a dimmed screen and disabled audio alerts, and may be configured to display a predetermined screen 140 on the touch-sensitive display area 122 to indicate that the mobile device 100 is configured in the beside mode.

It will be appreciated that the gesture 130 may be a swipe gesture in a vertical, horizontal, diagonal or other direction. The gesture 130 may also be a swipe gesture, pinch gesture, multi-touch gesture or other type of gesture detectable by the mobile device 100.

It will also be appreciated that the operating mode may be a beside mode or other mode that configures the mobile device 100 to one or more predetermined settings. The predetermined settings of an operating mode may be configured by a user, the device manufacturer or a third party software provider.

It can therefore be seen that a mobile device 100 can be configured to a particular operating mode upon detecting a single gesture 130 on the touch-sensitive display 102 of the mobile device 100. Thus, a user may provide a single input in the form of a gesture 130 to configure the mobile device 100 to an operating mode, instead of navigating through multiple option menus and/or performing multiple menu selections.

For example, the mobile device 100 may be operating in a "locked" mode which limits the inputs that can be detected by the mobile device 100 to prevent unauthorized or unintentional access. In this example, the gesture 130 may configure the mobile device 100 to another operating mode without first "unlocking" the mobile device 100, thus enabling the mobile device 100 to be configured more quickly and conveniently.

Examples of applicable mobile electronic devices may include, without limitation, cellular phones, smart-phones, tablet computers, wireless organizers, personal digital assistants, computers, laptops, handheld wireless communication devices, wirelessly enabled notebook computers, portable gaming devices, and the like. Such devices will hereinafter be commonly referred to as "mobile devices" 100 for the sake of clarity. It will however be appreciated that the principles described herein are also suitable to other electronic devices, e.g. "non-mobile" devices. For example, the principles herein are equally applicable to personal computers (PCs), tabletop computing devices, wall-mounted screens such as kiosks, or any other computing device.

The mobile device 100 may be a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

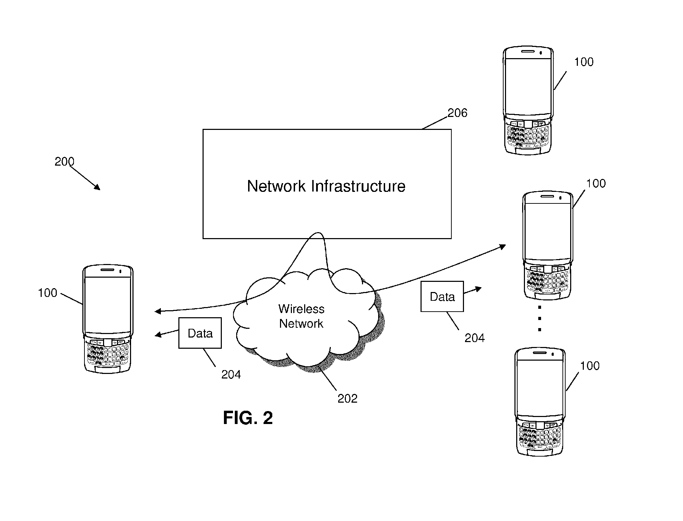

Referring to FIG. 2, an example communication system 200 is shown. The communication system 200, in this example, enables, at least in part, mobile devices 100 to communicate with each other via a wireless network 202. For example, as shown, data 204 may be exchanged between various mobile devices 100. Data 204 that is sent from one mobile device 100 to another mobile device 100 may be transmitted according to a particular messaging or communication medium, protocol, or other mechanism. For example, as shown in FIG. 2, data 204 may be sent over the wireless network 202 via a component of a network infrastructure 206. The network infrastructure 206 can include various systems that may be used by the mobile devices 100 to exchange data 204. For example, a peer-to-peer (P2P) system, a short message service centre (SMSC), an email system (e.g. web-based, enterprise based, or otherwise), a web system (e.g. hosting a website or web service), a host system (e.g. enterprise server), and social networking system may be provided by or within or be otherwise supported or facilitated by the network infrastructure 206. The mobile devices 100 may therefore send data to or receive data from other mobile devices 100 via one or more particular systems with which the mobile devices 100 are communicable via the wireless network 202 and network infrastructure 206.

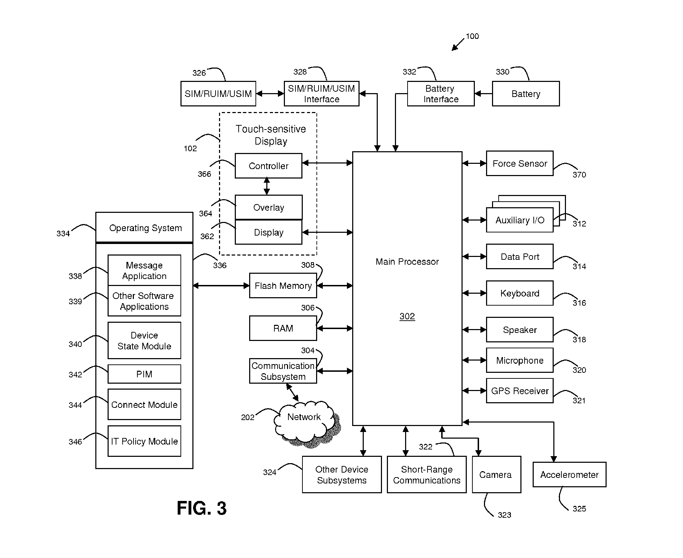

To aid the reader in understanding an example configuration of a mobile device 100, reference will be made to FIG. 3, which illustrates a diagram of an example of a mobile device 100. The mobile device 100 includes a number of components such as a main processor 302 that controls the overall operation of the mobile device 100. Communication functions, including data and voice communications, are performed through a communication subsystem 304. The communication subsystem 304 receives messages from and sends messages to a wireless network 202. In this example of the mobile device 100, the communication subsystem 304 is configured in accordance with the Global System for Mobile Communication (GSM) and General Packet Radio Services (GPRS) standards, which is used worldwide. Other communication configurations that are equally applicable are the 3G and 4G networks such as Enhanced Data-rates for Global Evolution (EDGE), Universal Mobile Telecommunications System (UMTS) and High-Speed Downlink Packet Access (HSDPA), Long Term Evolution (LTE), Worldwide Interoperability for Microwave Access (Wi-Max), etc. New standards are still being defined, but it is believed that they will have similarities to the network behaviour described herein, and it will also be understood by persons skilled in the art that the example described herein are intended to use any other suitable standards that are developed in the future. The wireless link connecting the communication subsystem 304 with the wireless network 202 represents one or more different Radio Frequency (RF) channels, operating according to defined protocols specified for GSM/GPRS communications.

The main processor 302 also interacts with additional subsystems such as a Random Access Memory (RAM) 306, a flash memory 308, a touch-sensitive display 102, an auxiliary input/output (I/O) subsystem 312, a data port 314, a keyboard 316, a speaker 318, a microphone 320, a GPS receiver 321, short-range communications 322, a camera 323, a accelerometer 325 and other device subsystems 324. Some of the subsystems of the mobile device 100 perform communication-related functions, whereas other subsystems may provide "resident" or on-device functions. By way of example, the display 102 and the keyboard 316 may be used for both communication-related functions, such as entering a text message for transmission over the network 202, and device-resident functions such as a calculator or task list. In one example, the mobile device 100 can include a non touch-sensitive display in place of, or in addition to the touch-sensitive display 102.

The mobile device 100 can send and receive communication signals over the wireless network 202 after required network registration or activation procedures have been completed. Network access is associated with a subscriber or user of the mobile device 100. To identify a subscriber, the mobile device 100 may use a subscriber module component or "smart card" 326, such as a Subscriber Identity Module (SIM), a Removable User Identity Module (RUIM) and a Universal Subscriber Identity Module (USIM). In the example shown, a SIM/RUIM/USIM 326 is to be inserted into a SIM/RUIM/USIM interface 328 in order to communicate with a network. Without the component 326, the mobile device 100 is not fully operational for communication with the wireless network 202. Once the SIM/RUIM/USIM 326 is inserted into the SIM/RUIM/USIM interface 328, it is coupled to the main processor 302.

The mobile device 100 is typically a battery-powered device and includes a battery interface 332 for receiving one or more rechargeable batteries 330. In at least some examples, the battery 330 can be a smart battery with an embedded microprocessor. The battery interface 332 is coupled to a regulator (not shown), which assists the battery 330 in providing power to the mobile device 100. Although current technology makes use of a battery, future technologies such as micro fuel cells may provide the power to the mobile device 100.

The mobile device 100 also includes an operating system 334 and software components 336 to 346 which are described in more detail below. The operating system 334 and the software components 336 to 346 that are executed by the main processor 302 are typically stored in a persistent store such as the flash memory 308, which may alternatively be a read-only memory (ROM) or similar storage element (not shown). Those skilled in the art will appreciate that portions of the operating system 334 and the software components 336 to 346, such as specific device applications, or parts thereof, may be temporarily loaded into a volatile store such as the RAM 306. Other software components can also be included, as is well known to those skilled in the art.

The subset of software applications 336 that control basic device operations, including data and voice communication applications, may be installed on the mobile device 100 during its manufacture. Software applications may include a message application 338, a device state module 340, a Personal Information Manager (PIM) 342, a connect module 344 and an IT policy module 346. A message application 338 can be any suitable software program that allows a user of the mobile device 100 to send and receive electronic messages, wherein messages are typically stored in the flash memory 308 of the mobile device 100. A device state module 340 provides persistence, i.e. the device state module 340 ensures that important device data is stored in persistent memory, such as the flash memory 308, so that the data is not lost when the mobile device 100 is turned off or loses power. A PIM 342 includes functionality for organizing and managing data items of interest to the user, such as, but not limited to, e-mail, contacts, calendar events, and voice mails, and may interact with the wireless network 202. A connect module 344 implements the communication protocols that are required for the mobile device 100 to communicate with the wireless infrastructure and any host system, such as an enterprise system, that the mobile device 100 is authorized to interface with. An IT policy module 346 receives IT policy data that encodes the IT policy, and may be responsible for organizing and securing rules such as the "Set Maximum Password Attempts" IT policy.

Other types of software applications or components 339 can also be installed on the mobile device 100. These software applications 339 can be pre-installed applications (i.e. other than message application 338) or third party applications, which are added after the manufacture of the mobile device 100. Examples of third party applications include games, calculators, utilities, etc.

The additional applications 339 can be loaded onto the mobile device 100 through at least one of the wireless network 202, the auxiliary I/O subsystem 312, the data port 314, the short-range communications subsystem 322, or any other suitable device subsystem 324.

The data port 314 can be any suitable port that enables data communication between the mobile device 100 and another computing device. The data port 314 can be a serial or a parallel port. In some instances, the data port 314 can be a USB port that includes data lines for data transfer and a supply line that can provide a charging current to charge the battery 330 of the mobile device 100.

For voice communications, received signals are output to the speaker 318, and signals for transmission are generated by the microphone 320. Although voice or audio signal output is accomplished primarily through the speaker 318, the display 102 can also be used to provide additional information such as the identity of a calling party, duration of a voice call, or other voice call related information.

The touch-sensitive display 102 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example, the touch-sensitive display 102 is a capacitive touch-sensitive display which includes a capacitive touch-sensitive overlay 364. The overlay 364 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 362 of the touch-sensitive display 102 may include a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch contacts or touch events, may be detected by the touch-sensitive display 102. The processor 302 may determine attributes of the touch, including a location of a touch. Touch location data may include an area of contact or a single point of contact, such as a point at or near a center of the area of contact, known as the centroid. A signal is provided to the controller 366 in response to detection of a touch. A touch may be detected from any suitable object, such as a finger, thumb, appendage, or other items, for example, a stylus, pen, or other pointer, depending on the nature of the touch-sensitive display 102. The location of the touch moves as the detected object moves during a touch. The controller 366 and/or the processor 302 may detect a touch by any suitable contact member on the touch-sensitive display 102. Similarly, multiple simultaneous touches, are detected.

One or more gestures are also detected by the touch-sensitive display 102. A gesture is a particular type of touch on a touch-sensitive display 102 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture.

An example of a gesture is a swipe (also known as a flick). A swipe has a single direction. The touch-sensitive overlay 364 may evaluate swipes with respect to the origin point at which contact is initially made with the touch-sensitive overlay 364 and the end point at which contact with the touch-sensitive overlay 364 ends rather than using each of location or point of contact over the duration of the gesture to resolve a direction.

Examples of swipes include a horizontal swipe, a vertical swipe, and a diagonal swipe. A horizontal swipe typically comprises an origin point towards the left or right side of the touch-sensitive overlay 364 to initialize the gesture, a horizontal movement of the detected object from the origin point to an end point towards the right or left side of the touch-sensitive overlay 364 while maintaining continuous contact with the touch-sensitive overlay 364, and a breaking of contact with the touch-sensitive overlay 364. Similarly, a vertical swipe typically comprises an origin point towards the top or bottom of the touch-sensitive overlay 364 to initialize the gesture, a horizontal movement of the detected object from the origin point to an end point towards the bottom or top of the touch-sensitive overlay 364 while maintaining continuous contact with the touch-sensitive overlay 364, and a breaking of contact with the touch-sensitive overlay 364.

Swipes can be of various lengths, can be initiated in various places on the touch-sensitive overlay 364, and need not span the full dimension of the touch-sensitive overlay 364. In addition, breaking contact of a swipe can be gradual in that contact with the touch-sensitive overlay 364 is gradually reduced while the swipe is still underway.

Meta-navigation gestures may also be detected by the touch-sensitive overlay 364. A meta-navigation gesture is a gesture that has an origin point that is outside the display area of the touch-sensitive overlay 364 and that moves to a position on the display area of the touch-sensitive display. Other attributes of the gesture may be detected and be utilized to detect the meta-navigation gesture. Meta-navigation gestures may also include multi-touch gestures in which gestures are simultaneous or overlap in time and at least one of the touches has an origin point that is outside the display area and moves to a position on the display area of the touch-sensitive overlay 364. Thus, two fingers may be utilized for meta-navigation gestures. Further, multi-touch meta-navigation gestures may be distinguished from single touch meta-navigation gestures and may provide additional or further functionality.

In some examples, an optional force sensor 370 or force sensors is disposed in any suitable location, for example, between the touch-sensitive display 102 and a back of the mobile device 100 to detect a force imparted by a touch on the touch-sensitive display 102. The force sensor 370 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

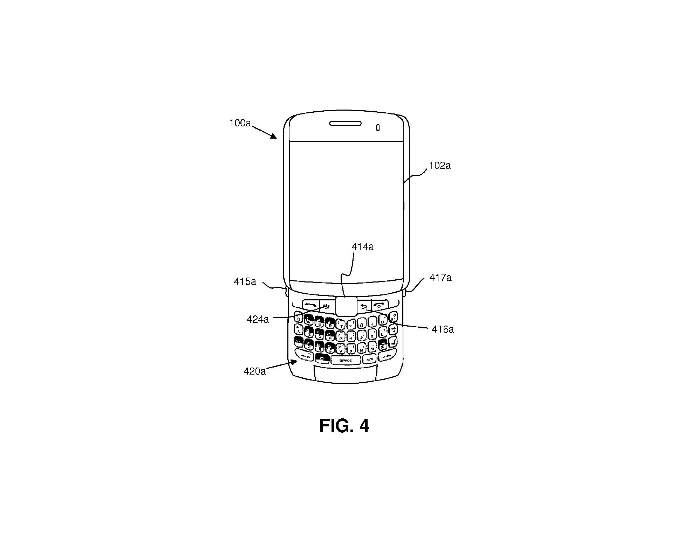

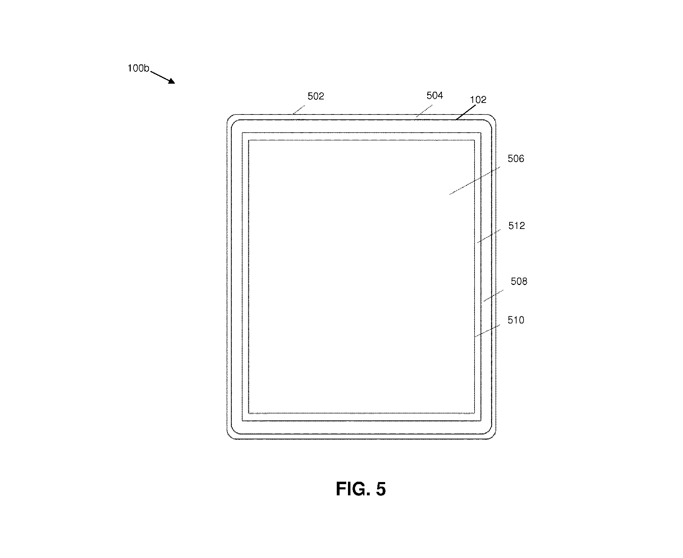

Referring to FIGS. 4 and 5, one example of a mobile device 100a is shown in FIG. 4 and another example of a mobile device 100b is shown in FIG. 5. It will be appreciated that the numeral "100" will hereinafter refer to any mobile device 100, including the examples 100a and 100b, those examples enumerated above or otherwise. It will also be appreciated that a similar numbering convention may be used for other general features common between all figures.

The mobile device 100a shown in FIG. 4 includes a touch-sensitive display area 102a and a cursor or positioning device, which in this example is in the form of a trackpad 414a. In this example, the touch-sensitive display area 102a spans the entire touch-sensitive display. The trackpad 414a permits multi-directional positioning of a selection indicator or cursor that can be displayed on the touch-sensitive display area 102a such that the selection cursor can be moved in an upward, downward, left and right direction, and if desired and/or permitted, in any diagonal direction. A selection cursor may include a box, alteration of an icon or any combination of features that enable the user to identify the currently chosen icon or item. The trackpad 414a in this example is situated on the front face of a housing for mobile device 100a to enable a user to manoeuvre the trackpad 414a while holding the mobile device 100a in one hand. The trackpad 414a may serve as another input member (in addition to a directional or positioning member) to provide selection inputs to a processor of the mobile device and can preferably be pressed in a direction towards the housing of the mobile device 100a to provide such a selection input. It will be appreciated that the trackpad 414a is only one example of a suitable positioning device. For example, a trackball, touch-sensitive display, OLED, or other input mechanism may equally apply.

The mobile device 100a in FIG. 4 also includes a programmable convenience button 415a to activate a selection application such as, for example, a calendar or calculator. Further, mobile device 100a also includes an escape or cancel button 416a, a camera button 417a, a menu or option button 424a and a keyboard 420a. The camera button 417a is able to activate photo and video capturing functions, e.g. when pressed in a direction towards the housing. The menu or option button 424a can be used to load a menu or list of options on the display 102a when pressed. In this example, the escape or cancel button 416a, the menu option button 424a, and a keyboard 420a are disposed on the front face of the mobile device housing, while the convenience button 415a and camera button 417a are disposed at the side of the housing. This button placement enables a user to operate these buttons while holding the mobile device 100a in one hand. The keyboard 420a is, in this example, a standard QWERTY keyboard, however, it will be appreciated that reduced QWERTY or virtual keyboards (e.g. as provided by a touch-sensitive display) may equally apply.

It will be appreciated that for the mobile device 100, a wide range of one or more positioning or cursor/view positioning mechanisms such as a touch/track pad, a positioning wheel, a joystick button, a mouse, a touch-sensitive display, a set of arrow keys, a tablet, an accelerometer (for sensing orientation and/or movements of the mobile device 100 etc.), OLED, or other whether presently known or unknown may be employed. Similarly, any variation of keyboard 420a may be used. It will also be appreciated that the mobile devices 100 shown in FIGS. 4 and 5 are for illustrative purposes only and various other mobile devices 100 are equally applicable to the following examples. Other buttons may also be disposed on the mobile device housing such as colour coded "Answer" and "Ignore" buttons to be used in telephonic communications.

A front view of an example of the mobile device 100b is shown in FIG. 5. The mobile device 100b includes a housing 502 that encloses components such as shown in FIG. 3. The housing 502 may include a back, sidewalls, and a front 504 that frames the touch-sensitive display 102. The example mobile device 100b shown in FIG. 5 can represent a portable tablet computer or other handheld or otherwise portable device.

In the example of FIG. 5, the touch-sensitive display 102 is generally centered in the housing 502 such that a display area 506 of the touch-sensitive overlay 364 is generally centered with respect to the front 504 of the housing 502. The non-display area 508 of the touch-sensitive overlay 364 extends around the display area 506. In the presently described example, the width of the non-display area is 4 mm. In one example, the touch-sensitive display area 122 and the touch-sensitive non-display area 124 of FIG. 1 can be implemented as a display area 506 of the touch-sensitive overlay 364 and a non-display area 508 of the touch-sensitive overlay 364, respectively.

For the purpose of the present example, the touch-sensitive overlay 364 extends to cover the display area 506 and the non-display area 508. Touches on the display area 506 may be detected and, for example, may be associated with displayed selectable features. Touches on the non-display area 508 may be detected, for example, to detect a meta-navigation gesture. Alternatively, meta-navigation gestures may be determined by both the non-display area 508 and the display area 506. The density of touch sensors may differ from the display area 506 to the non-display area 508. For example, the density of nodes in a mutual capacitive touch-sensitive display, or density of locations at which electrodes of one layer cross over electrodes of another layer, may differ between the display area 506 and the non-display area 508.

Gestures received on the touch-sensitive display 102 may be analyzed based on the attributes to discriminate between meta-navigation gestures and other touches, or non-meta navigation gestures. Meta-navigation gestures may be identified when the gesture crosses over a boundary near a periphery of the display 362, such as a boundary 510 between the display area 506 and the non-display area 508. In the example of FIG. 5, the origin point of a meta-navigation gesture may be determined utilizing the area of the touch-sensitive overlay 364 that covers the non-display area 508.

A buffer region 512 or band that extends around the boundary 510 between the display area 506 and the non-display area 508 may be utilized such that a meta-navigation gesture is identified when a touch has an origin point outside the boundary 510 and the buffer region 512 and crosses through the buffer region 512 and over the boundary 510 to a point inside the boundary 510. Although illustrated in FIG. 5, the buffer region 512 may not be visible. Instead, the buffer region 512 may be a region around the boundary 510 that extends a width that is equivalent to a predetermined number of pixels, for example. Alternatively, the boundary 510 may extend a predetermined number of touch sensors or may extend a predetermined distance from the display area 506. The boundary 510 may be a touch-sensitive region or may be a region in which touches are not detected.

Gestures that have an origin point in the buffer region 512, for example, may be identified as non-meta navigation gestures. Optionally, data from such gestures may be utilized by an application as a non-meta navigation gesture. Alternatively, data from such gestures may be discarded such that touches that have an origin point on the buffer region 512 are not utilized as input at the mobile device 100.

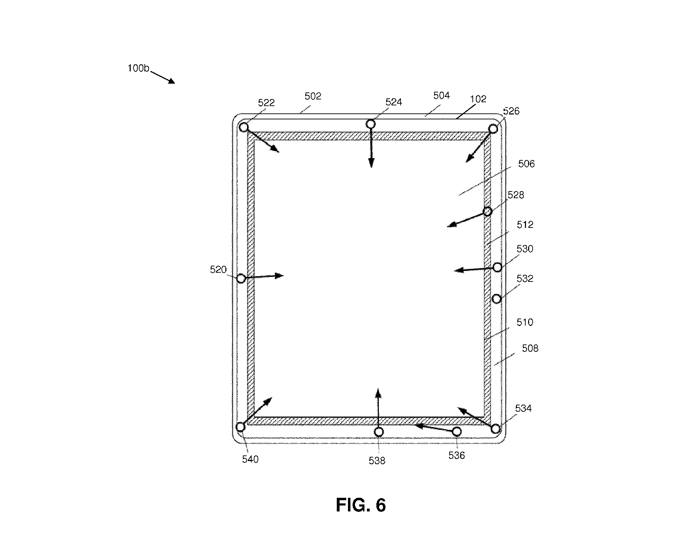

FIG. 6 illustrates examples of touches on the touch-sensitive display 102. The buffer region 512 is illustrated in FIG. 6 by hash markings for the purpose of explanation. As indicated, the buffer region 512 may not be visible to the user. For the purpose of explanation, touches are illustrated by circles at their points of origin. Arrows extending from the circles illustrate the paths of the touches that are gestures.

The touch 538 begins at the origin point outside the boundary 510 and outside the buffer region 512. The path of the touch 538 crosses the buffer region 512 and the boundary 510 and is therefore identified as a meta-navigation gesture. Similarly, the touches 520, 530, 524, 522, 526, 540, 534 each have origin points outside the boundary 510 and the buffer region 512 and their paths cross the buffer region 512 and the boundary 510. Each of the touches 520, 530, 524, 522, 526, 540, 534 is therefore identified as a meta-navigation gesture. The touch 528, however, has an origin point that falls within the buffer region 512 and the touch 528 is therefore not identified as a meta-navigation gesture. The touch 536 begins at an origin point outside the boundary 510 and the buffer region 512. The path of the touch 536, however, does not cross the boundary 510 and is therefore not identified as a meta-navigation gesture. The touch 532 also has an origin point outside the boundary 510 and the buffer region 512 but is not a gesture and therefore does not cross the boundary 510 and is not identified as a meta-navigation gesture.

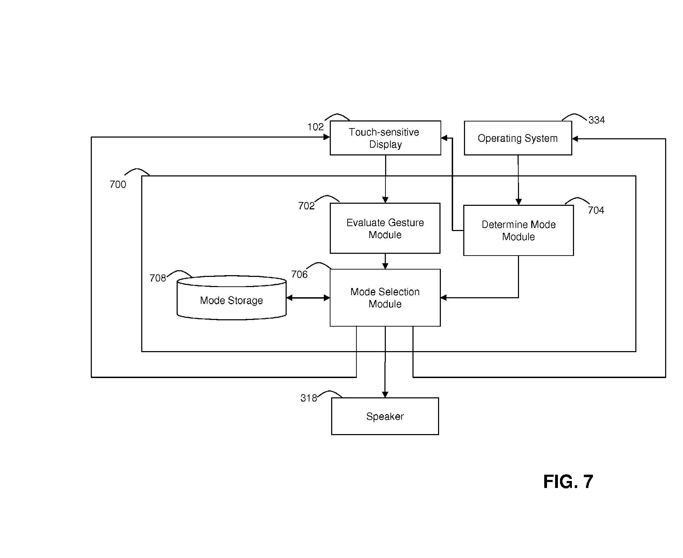

Referring to FIG. 7, an example of a configuration for a gesture input application 700 is provided. The gesture input application 700 can be one of the other software applications 339 of FIG. 3 that can be loaded on the mobile device 100. The gesture input application 700 can request details of activity occurring in, or receive inputs from, a component that can receive gestures 130, such as a touch-sensitive display 102 for example. It will be appreciated that other touch-sensitive input mechanisms can be used in replacement of, or in addition to the touch-sensitive display 102 to provide gestures 130 to the gesture input application 700. The gesture input application 700 can also receive inputs from other components that can be used to determine a current operating mode of the mobile device 100, such as the operating system 334. In response to a gesture 130, the gesture input application 700 can configure one or more components of the mobile device 100 associated with an operating mode, such as those effecting the audio, visual and/or haptic properties of the mobile device 100 (e.g. speaker 316, touch-sensitive display 102, operating system 334, etc.)

The gesture input application 700 in the example of FIG. 7 includes an evaluate gesture module 702 for receiving a gesture 130 performed on the touch-sensitive display 102 and for evaluating one or more properties of the gesture 130. The gesture input application 700 also includes a determine mode module 704 for determining a current operating mode of the mobile device 100. The gesture input application 700 also includes a mode selection module 706 for selecting an operating mode to configure the mobile device 100 and a mode storage 708 for storing predetermined operating modes of the mobile device 100.

The evaluate gesture module 702 receives a gesture 130 from the touch-sensitive display 102 and determines various properties associated with the gesture 130 such as its origin point, end point, path, duration, orientation, pressure, etc. In an example, the evaluate gesture module 702 can determine whether the gesture 130 is contained within the touch-sensitive non-display area 124 or touch-sensitive display area 122, or crosses between the two areas.

The determine mode module 704 receives inputs from components of the mobile device 100, such as the operating system 334, to determine a current operating mode of the mobile device 100. For example, the determine mode module 704 may determine that the mobile device 100 is operating in a locked mode typically used when the mobile device 100 has been inactive for a predetermined period of time or to prevent unauthorized or inadvertent access. In another example, the determine mode module 704 may determine that the mobile device 100 is in a charging state when the mobile device 100 is connected to a power source (e.g. AC adapter, docking station, etc.). In an embodiment, the determine mode module 704 may also instruct that touch-sensitive display 102 to display a visual indicator associated with an operating mode, as will be further described below.

The mode selection module 706 receives information on a gesture 130 and/or a current operating mode of the mobile device 100 and uses such information to select an operating mode stored in the mode storage 708 to configure the mobile device 100. In one example, one or more properties of a gesture 130 or a current operating mode may be associated with an operating mode stored in the mode storage 708 such that the mode selection module 706 finds the operating mode by looking up the properties of the detected gesture 130 or the current operating mode.

Each operating mode selected by the mode selection module 706 includes predetermined settings to configure components available on the mobile device 100 such as the speaker 318, touch-sensitive display 102 and/or operating system 334, for example.

It will be appreciated that any module, subsystem component exemplified herein that executes instructions or operations may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data, except transitory propagating signals per se. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 100 or accessible or connectable thereto. Any application or module herein described may be implemented using computer readable/executable instructions or operations that may be stored or otherwise held by such computer readable media.

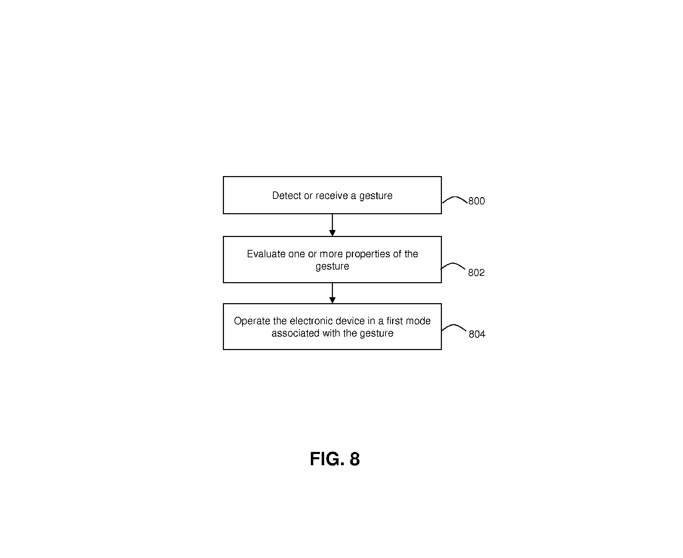

Referring to FIG. 8, an example set of computer executable instructions is provided for controlling an electronic device, such as a mobile device 100. At 800, a gesture 130 is received on or detected by a touch-sensitive input mechanism of the mobile device 100. At 802, one or more properties of the gesture 130 is evaluated. At 804, the electronic device is operated in a first mode associated with the gesture 130.

As noted above, at 800, a gesture 130 is received or detected from a touch-sensitive input mechanism. In an example configuration of the gesture input application 700, the touch-sensitive display 102 or a touch pad (not shown) may implement 800 (FIG. 7).

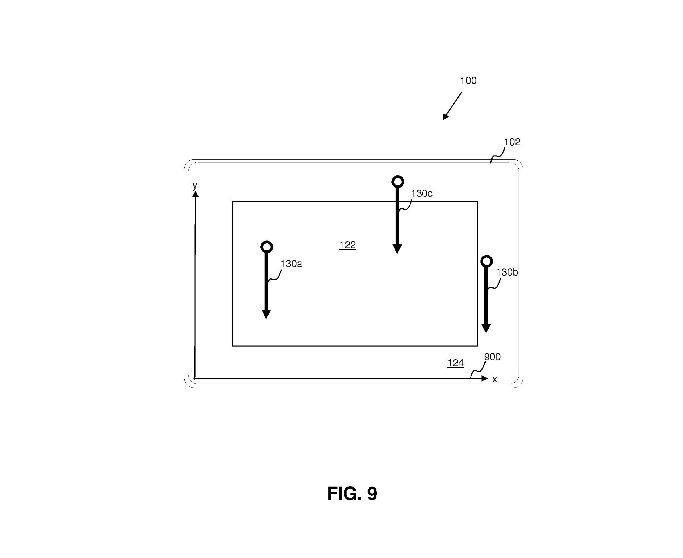

At 802, one or more properties of the gesture 130 are evaluated such as the gesture's origin point, end point, path, duration, orientation, pressure, etc. In an example configuration of the gesture input application 700, the evaluate gesture module 702 may implement 802 (FIG. 7). In one example, the surface of the touch-sensitive display 102 may be mapped to a co-ordinate system, such as the x-y coordinate system 900 of FIG. 9. The origin point, end point, and one or more intermediate points along the path of the gesture can be represented by (x,y) co-ordinates. The evaluate gesture module 702 can calculate the difference between two or more points along the gesture 130 to determine the orientation of the gesture 130. The evaluate gesture module 702 can also determine whether a gesture is located within the touch-sensitive display area 122 (e.g. gesture 130a) or touch-sensitive non-display area 124 (e.g. gesture 130b), or crosses between both areas (e.g. gesture 130c), by comparing the co-ordinates of a gesture against the co-ordinates that fall within the touch-sensitive display area 122 and touch-sensitive non-display area 124. In another example, the length of the gesture 130 can be evaluated and if determined to be less than a threshold, the gesture 130 can be ignored.

At 804, the mobile device is configured to operate in a first mode associated with the gesture 130. In an example configuration of the gesture input application 700, the mode selection module 706 may implement 804 (FIG. 7).

In an example, a first mode is associated with a gesture that incorporates the touch-sensitive non-display area 124 (e.g. gesture 130b or 130c). This enables the mobile device 100 to use of the same gesture type (e.g. downward swipe gesture) for different functions, thus increasing the use of easily performed gestures on the mobile device 100. For example, the downward swipe gesture 130b or 130c that incorporates the touch-sensitive non-display area 124 may be used to trigger the mobile device 100 to operate in a bedside mode while a downward swipe gesture 130a contained within the touch-sensitive display area 122 may be used to perform a different function not determined by the gesture input application 700 (e.g. scrolling content displayed on the touch-sensitive display area 122).

In another example, a first mode is associated with a gesture contained within the touch-sensitive non-display area 124 (e.g. gesture 130b). This enables the mobile device 100 to turn off the touch-sensitive display area 122 to reduce power consumption of the mobile device 100 while still enabling the mobile device 100 to detect a gesture 130b. For example, a power management application 339 or subsystem of the operating system 334 of the mobile device 100 may turn off the display and/or sensing capabilities of the touch-sensitive display area 122 after a period of inactivity, such as the period when a user prepares to retire for bed. A user may then perform a gesture 130b to configure the mobile device 100 into the bedside mode, irrespective of whether the touch-sensitive display area 122 has been disabled or turned off.

In one example of a bedside mode, the mobile device 100 is configured to operate with reduced visual, audio and/or haptic alerts so as to reduce or eliminate visual, audio and/or haptic disruptions from the mobile device 100 while a user is resting or sleeping. For example, the touch-sensitive display area 122 may be dimmed or turned off, one or more audio alerts (e.g. ring tone for incoming calls, e-mails or text messages) may be disabled or replaced with haptic alerts (e.g. vibrations of the mobile device 100) or audio and haptic alerts may be disabled altogether. It will be appreciated that the specific configuration of the first mode can be any combination of settings of the mobile device 100 and may be predetermined by the user, the device manufacturer or a third party software application 339.

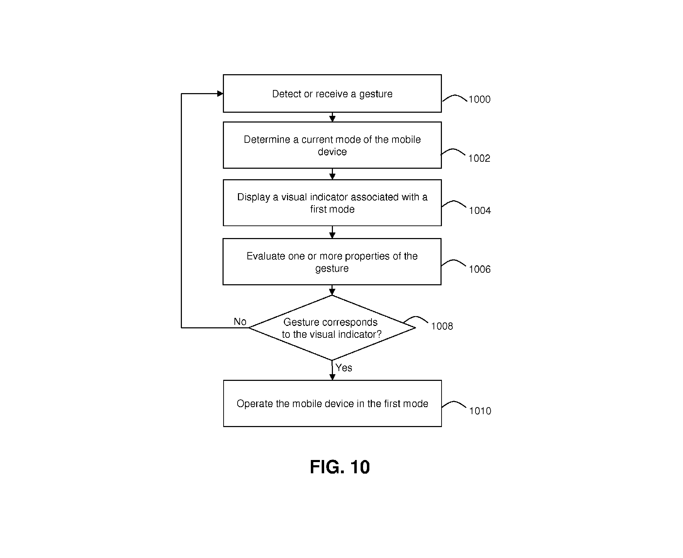

Referring to FIG. 10, another example set of computer executable instructions is provided for controlling an electronic device, such as a mobile device 100. At 1000, a gesture 130 is received on or detected by a touch-sensitive input mechanism of the mobile device 100. At 1002, a current mode of the mobile device 100 is determined. At 1004, a visual indicator associated with a first mode is displayed on the mobile device 100. At 1006, one or more properties of the gesture 130 is evaluated. At 1008, a check is performed to determine whether the gesture 130 corresponds to the visual indicator. If the gesture 130 corresponds to the visual indicator, the mobile device 100 is configured to operate in the first mode at 1010. Otherwise, 1000 is repeated to detect or receive another gesture 130.

Operation 1000 is substantially similar to 800 described above.

As noted above, at 1002, a current mode of the mobile device 100 is determined. In an example configuration of the gesture input application 700, the determine mode module 704 may implement 1002 (FIG. 7). It will be appreciated that the mobile device 100 can take into account various operating conditions and properties of the mobile device 100 to determine the current mode such as time, date, device state, applications running on the mobile device 100, input/output connections used, etc.

In an example embodiment, if the current mode is determined to be particular operating mode, such as a locked mode or charging state, the mobile device 100 displays a visual indicator associated with a first mode at 1004. A locked mode or charging state may suggest that the mobile device 100 is not currently being used by a user and thus, reducing or disabling one or more functions of the mobile device 100 in such modes may conserve power without affecting the user experience. A locked mode or charging state may also suggest that a user is sleeping or resting, since users often take this time to charge the mobile device 100 and the period of inactivity of the mobile device 100 that passes when the user is sleeping often triggers the device to enter a locked mode. Since a user may keep the mobile device 100 nearby, reducing or disabling one or more functions of the mobile device 100, such as audio, visual and/or haptic outputs, can reduce the number of disruptions to the user while resting.

At 1004, a visual indicator associated with a first mode is displayed on the mobile device 100. In an example configuration of the gesture input application 700, the determine mode module 704 may instruct the touch-sensitive display area 122 of the touch-sensitive display 102 to implement 1004 (FIG. 7). It will be appreciated that a visual indicator can include an icon, text, graphic or other image that can be displayed on the touch-sensitive display area 122. It will also be appreciated that the visual indicator can be associated with various operating modes available on the mobile device 100.

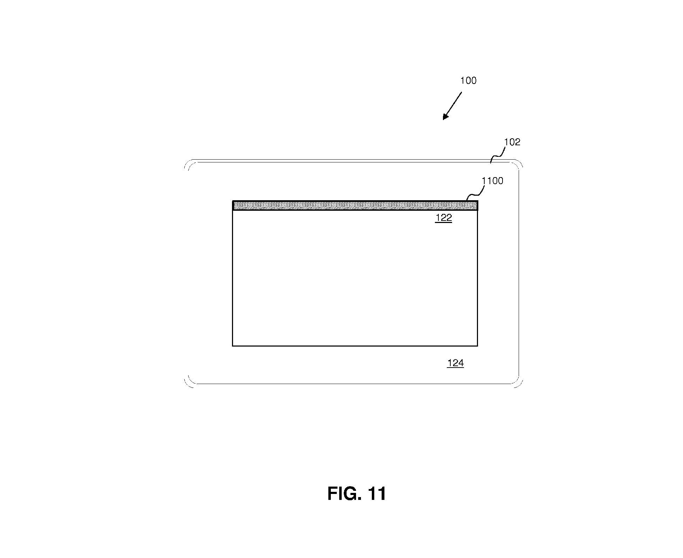

In the example of FIGS. 11-13, the visual indicator is a handle 1100 that can be dragged downwards to reveal the screen 140 associated with a beside mode. In this example, the handle is displayed in FIG. 11 upon determining the current mode of the mobile device 100 includes a locked mode and a charging state.

At 1006, the gesture 130 is evaluated for one or more properties and specifically, at 1008, whether the gesture 130 corresponds to the visual indicator associated with the first mode. Operations 1006 and 1008 are substantially similar to 802 described above. In an example configuration of the gesture input application 700, the evaluate gesture module 702 may implement 1006 and 1008 (FIG. 7).

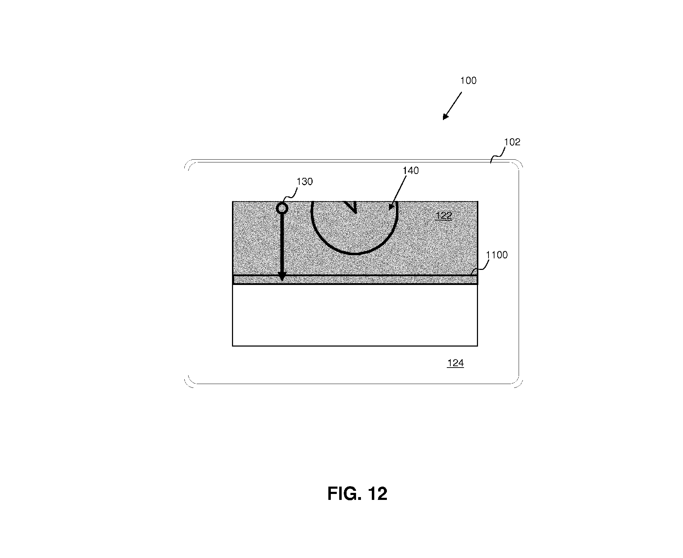

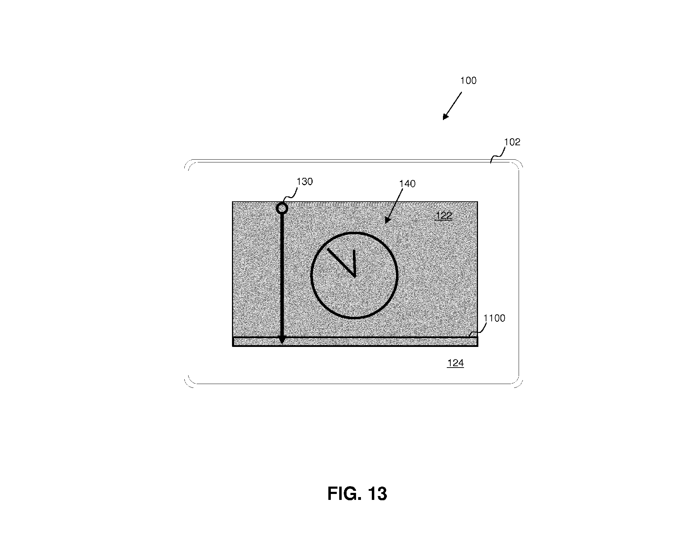

In the example of FIGS. 11-13, the gesture 130 is evaluated to determine if the gesture 130 drags the handle 1100 to the bottom edge of the touch-sensitive display area 122 of the mobile device 100 such that the screen 140 indicative of the bedside mode is fully displayed. FIG. 12 illustrates a gesture 130 that has dragged the handle 1100 partially across the touch-sensitive display area 122 such that the screen 140 is partially displayed. The gesture 130 of FIG. 12 does not satisfy the check at 1008. FIG. 13 illustrates a gesture 130 that has dragged the handle 1100 completely across the touch-sensitive display area 122 such that the screen 140 is fully displayed and covering the touch-sensitive display area 122. The gesture 130 of FIG. 13 does satisfy the check at 1008. It will be appreciated that a gesture can correspond to a visual indicator through other interactions that can be detected by the mobile device 100 such as tapping a touch-sensitive display at the location of the visual indicator or responding to a visual indicator that is in the form of a user prompt.

Use of a visual indicator, such as the handle 1100, can provide a reminder to a user to configure the mobile device 100 to a particular operating mode. Further, the interaction between the handle 1100 and the gesture 130, and specifically, using the gesture 130 to drag the handle 1100 downwards, may provide a more natural, intuitive and/or easier action to perform to configure the mobile device 100 to a bedside mode as the action mimics drawing of blinds to cover a bedroom window.

Referring back to FIG. 10, at 1010, after determining that the gesture 130 corresponds to the visual indicator, the mobile device 100 is configured to operate in the first mode associated with the visual indicator. In an example configuration of the gesture input application 700, the mode selection module 706 may implement 1010 (FIG. 7). In the example of FIGS. 11-13, the bedside mode is associated with the handle 1100.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

The steps or operations in the flow charts and diagrams described herein are just for example. There may be many variations to these steps or operations without departing from the spirit of the invention or inventions. For instance, the steps may be performed in a differing order, or steps may be added, deleted, or modified.

Although the above has been described with reference to certain specific examples, various modifications thereof will be apparent to those skilled in the art as outlined in the appended claims.

## Claims

1. A method of controlling an electronic device comprising:
detecting a gesture on a touch-sensitive input mechanism of the electronic device; and
operating the electronic device in a first mode associated with the gesture.

2. The method of claim 1, further comprising, prior to detecting the gesture, determining that the electronic device is operating in a second mode.

3. The method of claim 2, wherein the second mode comprises any one or more of: a locked mode and a charging state.

4. The method of claim 2 or claim 3, further comprising displaying a visual indicator associated with the first mode upon determining the second mode.

5. The method of claim 4, wherein the gesture interacts with the visual indicator to commence operating the electronic device in the first mode.

6. The method of any one of claims 1 to 5, wherein the first mode comprises any one or more of: reducing an audio alert, reducing visibility of at least a portion of a display of the electronic device, reducing a haptic alert and reducing power consumption.

7. The method of any one of claims 1 to 6, wherein the first mode is a bedside mode.

8. The method of any one of claims 1 to 7, wherein the gesture is contained within one or more specific areas of the touch-sensitive input mechanism.

9. The method of claim 8, wherein the one or more specific areas comprises a touch-sensitive non-display area.

10. A computer readable storage medium for controlling an electronic device, the computer readable storage medium comprising computer executable instructions that when executed by a processor cause the processor to perform the method according to any one of claims 1 to 9.

11. An electronic device comprising a processor, a touch-sensitive input mechanism and memory, the memory storing computer executable instructions that when executed by the processor cause the processor to perform the method according to any one of claims 1 to 9.
